# EUROPÄISCHE PATENTANMELDUNG

(11) **EP 0 830 831 A2**
(43) Veröffentlichungstag der Anmeldung: **25.03.1998**
(21) Anmeldenummer: 97116047.8
(22) Anmeldetag: 16.09.1997
(51) Int. Cl.: A47J 37/07

(54) **Gasgrillgerät**

(30) Priorität: 19.09.1996 DE 19638310
(71) Anmelder: Rüdiger Buhlan GmbH, 01445 Radebeul (DE)
(72) Erfinder: Buhlan, Rüdiger, 01445 Radebeul (DE)
(74) Vertreter: Hofmann, Klaus

(57) **Zusammenfassung**

Aufgabe der Erfindung ist es, ein transportables Gasgrillgerät mit hohem Wirkungsgrad zu entwickeln, bei dem die Rauchbelästigung und die Verbrennungsgefahr auf ein vernachlässigbares Maß reduziert werden und die Zubereitung von Speisen im eigenen Saft möglich ist.

Erfindungsgemäß ist auf einem Grundgestell (6) ein Rahmen (2) aufgesetzt, in den eine Specksteinplatte (1) eingesetzt ist. Zwischen Specksteinplatte (1) und Rahmen (2) befinden sich Luftaustrittsöffnungen, die bis in den Brennerraum (8) reichen. Im Inneren des Grundgestells (6) ist ein Brenner (5) befestigt, der mit einer ebenfalls im Grundgestell (6) befindlichen Gasflasche (7) verbunden ist. Oberhalb des Gasbrenners (5) ist ein Wärmeleitkörper (10) angeordnet. Vorteilhaft ist es, wenn der Wärmeleitkörper auf seitlichen Stützblechen geführt ist, lose auf diesen aufliegt und als ein geschlossener, sich von oben nach unten verjüngender Pyramidenstumpf ausgebildet ist. Um die direkte Brennerwärme noch besser zu verteilen, ist im Wärmeleitkörper (10) ein weiterer Körper gleicher Form enthalten und/oder er ist durch mehrere übereinanderliegende Querbleche unterteilt.

## Beschreibung

Die Erfindung betrifft ein Gasgrillgerät zur fettarmen Zubereitung von Speisen für die gewerbliche Gastronomie sowie den privaten Hausgebrauch.

In DE OS 35 43 663 wird ein Gasgrillgerät beschrieben, bei dem die Gasbrenner nach unten von einer Isoliersteinschicht und nach oben von Tragröhrchen begrenzt sind, auf denen eine Packung Heizsteine angeordnet ist. Diese Heizsteine übertragen ihre Wärme auf den Grillrost.
Nachteilig ist bei diesem Gerät, daß ein sehr hoher Energieaufwand erforderlich ist, um die Temperatur von 1200°C bis 1600°C in der Brennkammer bzw. die 1000°C der Heizsteine zu erreichen. Das herabtropfende Fett verbrennt auf den Heizsteinen und führt zu Geruchs- und Gesundheitsbelästigungen. Eine Verbrennungsgefahr ist ebenfalls gegeben.

Aufgabe der Erfindung ist es, ein transportables Gasgrillgerät mit hohem Wirkungsgrad zu entwickeln, bei dem die Rauchbelästigung und die Verbrennungsgefahr auf ein vernachlässigbares Maß reduziert werden und die Zubereitung von Speisen im eigenen Saft möglich ist.

Erfindungsgemäß ist auf einem Grundgestell ein Rahmen aufgesetzt, in den eine Specksteinplatte eingesetzt ist. Zwischen Specksteinplatte und Rahmen befinden sich Luftaustrittsöffnungen, die bis in den Brennerraum reichen. Im Inneren des Grundgestells ist ein Brenner befestigt, der mit einer ebenfalls im Grundgestell befindlichen Gasflasche verbunden ist. Oberhalb des Gasbrenners ist ein Wärmeleitkörper angeordnet. Durch den Wärmeleitkörper erfolgt eine Wärmeverteilung vom außen nach innen, was eine gleichmäßige Wärme in der gesamten Specksteinplatte zur Folge hat und wodurch ein Zerspringen der Specksteinplatte verhindert wird. Vorteilhaft ist es, wenn der Wärmeleitkörper auf seitlichen Stützblechen geführt ist, lose auf diesen aufliegt und als ein geschlossener, sich von oben nach unten verjüngender Pyramidenstumpf ausgebildet ist. Um die direkte Brennerwärme noch besser zu verteilen, ist im Wärmeleitkörper ein weiterer Körper gleicher Form enthalten und/oder er ist durch mehrere übereinanderliegende Querbleche unterteilt.

Vorteilhaft für die Reinigung und Wartung des Gerätes ist es, wenn der Rahmen mit der Specksteinplatte herausnehmbar ist. Unter dem Brenner befinden sich Wärmestrahlbleche, welche ein Aufheizen des Innenraumes des Grundgestells verhindern. Das Gerät besitzt vorteilhafterweise einen piezo-elektrischen Zünder und eine regelbaren Gaskompakthahn.

Um ein anwenderfreundliches Gerät zu erhalten, ist das rechteckige Grundgestell so ausgebildet, daß in Eßhöhe an 2 oder allen 4 Seiten Platten einsteckbar befestigt sind, die eine Arbeits- bzw. Eßtischfläche bilden. Diese Platten bestehen vorzugsweise aus Holz.

### Ausführungsbeispiel

Nachfolgend wird die Erfindung an einem Ausführungsbeispiel näher erläutert. Es zeigen:

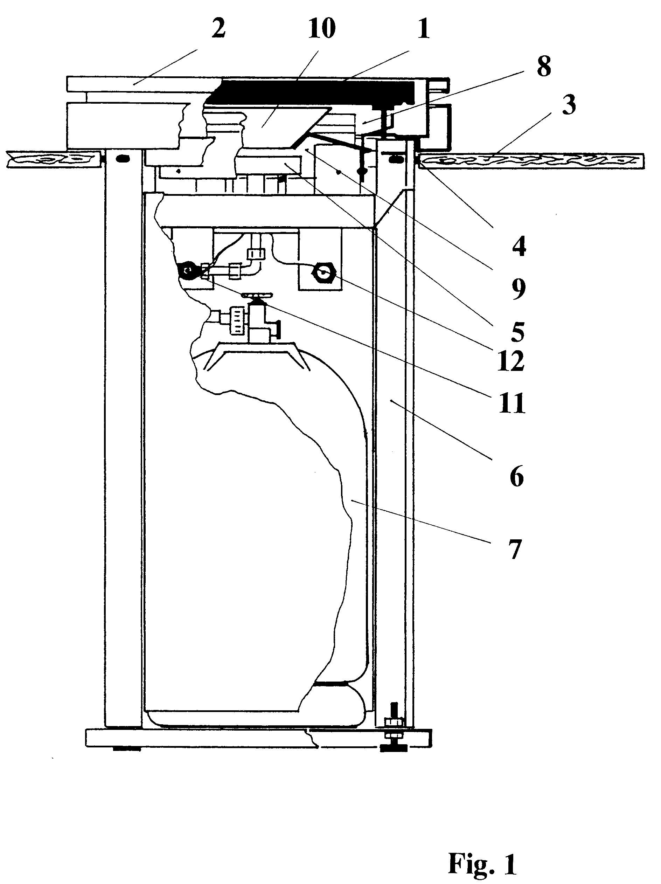

- Fig.1: Schnitt - Aufbau des Grilltisches

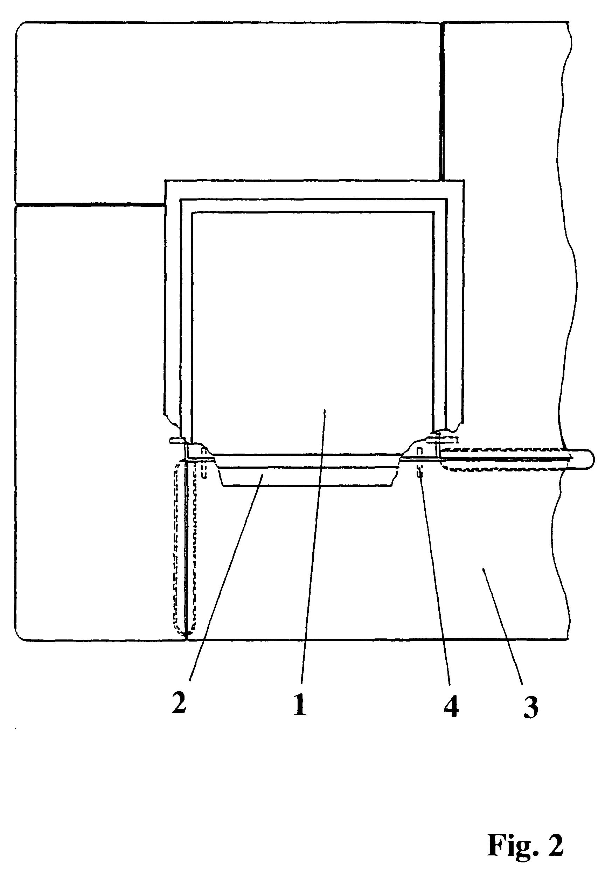

- Fig.2: Draufsicht der Tischkonstruktion mit Specksteinplatte und herausnehmbaren Rahmen

Die Specksteinplatte 1 mit einer Größe von etwa 40 x 40 cm und einer Dicke von 3 cm wird in einen polierten Edelstahlrahmen 2, welcher gleichzeitig mit einer Fettauffangrinne ausgestattet ist, gefaßt. Dieser Rahmen 2 ist einschließlich Stein aus dem Grundgestell 6 herausnehmbar, was die Reinigung des Steines 1 und des Rahmens 2 erleichtert.

Um eine gleichmäßige Temperatur des Steines zu erzeugen, wurde über dem Gasbrenner 5 ein Wärmeleitkörper 10 integriert, der die Unterseite der Specksteinplatte im Abstand von ca. 5 mm etwa 2/3 überdeckt. Dieser Körper ist erforderlich, da eine direkte Flammeneinwirkung auf den Stein nur die Mitte beheizt und eine ungenügende Wärmeverteilung zur Folge hätte. Der Wärmeleitkörper 10 ist ein geschlossener, sich von oben nach unten verjüngender Pyramidenstumpf, der auf seitlichen Stützblechen geführt wird und auf diesen lose aufliegt. Um die direkte Brennerwärme noch besser zu verteilen, ist im Wärmeleitkörper im Abstand von 1 cm nochmals ein Pyramidenstumpf enthalten. Oberhalb des inneren Pyramidenstumpfes ist ein weiteres Querbleche enthalten, welches den Wärmeleitkörper nochmals segmentiert.

Im Inneren des Brennerraumes 8 wird eine Luftwärme von ca. 400 bis 500°C erzeugt. Die Luftzirkulierung ist so gestaltet, daß die Rückstauwärme des Steines für die notwendige Temperatur genutzt wird. Dadurch ist es möglich, die Leistung auf 4 KW zu minimieren. Nur die überschüssige warme Luft wird um den Stein 1 nach oben abgeführt. Diese vermischt sich bereits vor Austritt mit Frischluft und kühlt sich auf ca. 50°C ab, so daß ein Zubereiten ohne Wärmebelästigung möglich und eine Verbrennungsgefahr ausgeschlossen ist.
Seitlich und unter dem Brenner 5 wurden Wärmestrahlbleche 9 angeordnet, welche die Gasarmaturen, den Raum für die Gasflasche 7 und das Grundgestell 6 vor direkter Wärmeeinstrahlung schützen. Der Brennerraum 8 wird durch diese Wärmestrahlbleche 9 so abgeschirmt, daß beim Bedienen die Strahlungswärme am äußeren Rahmen nicht lästig wird bzw. zu Verbrennungen führt.

Der Kompakthahn 11 ist mit einer Flammenüberwachung ausgestattet, so daß ein Gasaustritt bei Erlöschen der Flamme automatisch unterbunden wird. Zum Zünden des Brenners dient ein Piezozünder 12.

Damit eine Kontrolle des Zündvorganges und des Brenners 5 während der Benutzung möglich ist, wurde im herausnehmbaren Rahmen 2 eine Sichtöffnung integriert. Diese muß beim Einsetzen des Rahmens immer in Richtung Bedienfeld zeigen. Die gesamte Gasarmatur ist als separate Baugruppe aufgebaut und wird auch bei Defekt als Baugruppe ausgewechselt, ohne die gasführenden Teile separat zu demontieren.

Zur notwendigen Luftzufuhr für den Brenner 5 sind unter dem Rahmen 2 Schlitze integriert, welche so angeordnet sind, daß die Flammen bei Zug nicht ausgeblasen werden können.

Für das Zubereiten von Speisen steht an der Oberfläche des Steines 1 eine Temperatur von ca. 180°C zur Verfügung. Regulierbar ist die Temperatur mit einen Gaskompakthahn 11. Es stehen zwei Stufen zur Verfügung.

Das Fußteil des Grundgestells 6 ist als kompakte quadratische Säule ausgebildet und dient als Aufnahme für die Flüssiggasflasche 7, welche auf einem Bodenblech abgestellt wird. Zum Anschließen und Einstellen der Gasflasche 7 wird die Rückwand ausgehangen.

Um ein Ausrichten des Gasgrillgerätes zu ermöglichen, sind in den Fußsäulen unsichtbar höhenverstellbare Druckteller eingebaut. Diese Teller sind aus Kunststoff ausgebildet, damit ein beschädigen des Fußbodens vermieden wird.

Das Gasgrillgerät ist mit einer abnehmbaren Tisch- bzw. Abstellfläche 3 konstruiert. Diese besteht aus 4 Holzplatten, die mittels Metallstiften lösbar am Grundgestell 6 aufgesteckt werden können. Da keine seitliche Wärmestrahlung stattfindet, können an diesen Tisch die Speisen gleichzeitig verzehrt werden. Die Größe der Platten 3 ist so gewählt, daß Geschirr und Zubehör Platz findet. Die Höhe entspricht der Eßtischnorm, womit eine Erweiterung der Tafel möglich ist.

Alle Metallteile sind aus Edelstahl gefertigt, wobei die sichtbaren Flächen poliert sind, um eine leichtes Reinigen zu ermöglichen.

Auf Grund der niedrigen Temperatur an der Außenfläche ist ein Einbrennen von Fremdstoffen bzw. ein Verfärben ausgeschlossen.

Das Gasgrillgerät mit Specksteineinsatz ist ausgezeichnet zur fettarmen Zubereitung von Speisen geeignet. Der als Braten- und Garungsfläche dienende Speckstein ist ein Naturprodukt, welcher in skandinavischen Steinbrüchen abgebaut wird. Auf Grund seiner hohen Dichte hat er eine sehr hohe Wärmespeicherkapazität, welche die von Schamotte etwa um das 2,5-fache übertrifft. Außerdem ist er äußerst hitzebeständig. Zu seiner Verwendung als Grill- und Wärmeplatte wird dieser Stein fein geschliffen und einer speziellen Wärmebehandlung unterzogen. Er geht keine Verbindung mit anderen Stoffen ein und ist lebensmittelecht. Durch die hohe Wärmespeicherkapazität entsteht eine Rückstauwärme, die den Wirkungsgrad der notwendigen Brennerkapazität erhöht. Erst wenn die Rückstauwärme (sekundäre Energie) und die Brennerwärme (primäre Energie) sich vermischt haben, wird die überschüssige Energie (Wärme) seitlich vom Speckstein an die Umwelt abgegeben. Der Grill benötigt eine Primärenergie von ca. 3 kW. Ähnliche Geräte mit anderen Steinplatten würden ein vielfaches der Energie benötigen, um die entsprechende Grilltemperatur auf Dauer mit einen Stein dieser Größe zu erreichen. Die Speisen werden im eigenen Saft zubereitet. Beim Betreiben gibt es keine Rauchbelästigung. Eine Verbrennungsgefahr ist nahezu ausgeschlossen.

Die Betreiber sitzen beim Zubereiten um den Tisch der gleichzeitig zur Ablage von Eßgeschirr dient.

Das Gerät ist nicht ortsgebunden und sowohl in der Gastronomie als auch als Gartengrill für Privatverbraucher geeignet. Für die Gastronomie ist von Vorteil, daß der Rahmen in kürzester Zeit gegen einen Ersatzrahmen mit Stein ausgetauscht werden kann, um für die neuen Gäste eine saubere Arbeitsfläche zu schaffen.

Nach Gebrauch des Gerätes genügt es, die groben Ablagerungen auf der Braten- und Garungsfläche mit einem Spatel zu entfernen und die Fläche mit handelsüblichen Spülmitteln und Wasser zu reinigen.

### Bezugszeichenaufstellung

- 1: Specksteinplatte
- 2: herausnehmbarer Rahmen
- 3: Holzplatten als Arbeits- bzw. Eßtischfläche
- 4: Stifte
- 5: Gasbrenner
- 6: Grundgestell aus Edelstahl
- 7: Gasflasche
- 8: Brennerraum
- 9: Wärmestrahlblech
- 10: Wärmeleitkörper
- 11: Kompakthahn
- 12: Piezozünder

## Patentansprüche

1. Gasgrillgerät mit folgenden Merkmalen:
- auf einem Grundgestell (6) ist ein Rahmen (2) aufgesetzt, in den eine Specksteinplatte (1) eingesetzt ist, die als Braten- und Garungsfläche dient,
- zwischen Specksteinplatte (1) und Rahmen (2) befinden sich Luftaustrittsöffnungen bis in den Brennerraum (8),
- im Inneren des Grundgestells (6) ist ein Brenner (5) befestigt, der mit einer ebenfalls im Grundgestell (6) befindlichen Gasflasche (7) verbunden ist,
- oberhalb des Gasbrenners (5) und unterhalb der Specksteinplatte (1) ist ein Wärmeleitkörper (10) angeordnet, der als ein geschlossener Hohlkörper ausgebildet ist.

2. Gasgrillgerät nach Anspruch 1, dadurch gekennzeichnet, daß der Wärmeleitkörper (10) ein sich von oben nach unten verjüngender Pyramidenstumpf ist.

3. Gasgrillgerät nach den Ansprüchen 1 und 2, dadurch gekennzeichnet, daß im Wärmeleitkörper (10) ein weiterer Körper gleicher Form enthalten ist.

4. Gasgrillgerät nach den Ansprüchen 1 bis 3, dadurch gekennzeichnet, daß der Wärmeleitkörper (10) durch ein oder mehrere übereinanderliegende Querbleche unterteilt ist.

5. Gasgrillgerät nach den Ansprüchen 1 bis 4, dadurch gekennzeichnet, daß der Wärmeleitkörper (10) auf seitlichen Stützblechen geführt ist und auf diesen lose aufliegt.

6. Gasgrillgerät nach den Ansprüchen 1 bis 5, dadurch gekennzeichnet, daß der Wärmeleitkörper (10) die Specksteinplatte etwa zu 2/3 überdeckt.

7. Gasgrillgerät nach den Ansprüchen 1 bis 6, dadurch gekennzeichnet, daß der Rahmen (2) aus dem Grundgestell (6) herausnehmbar ist.

8. Gasgrillgerät nach den Ansprüchen 1 bis 7, dadurch gekennzeichnet, daß sich unter und seitlich vom Brennerraum (8) Wärmestrahlbleche (9) befinden.

9. Gasgrillgerät nach den Ansprüchen 1 bis 8, dadurch gekennzeichnet, daß das Gasgrilgerät einen piezoelektrischen Zünder (12) und einen regelbaren Gaskompakthahn (11) besitzt.

10. Gasgrillgerät nach den Ansprüchen 1 bis 9, dadurch gekennzeichnet, daß der Rahmen (2) rechteckig ausgebildet ist und sich in Eßhöhe an 2 oder allen 4 Seiten mittels Metallstiften einsteckbare Platten befinden, die eine Arbeits- bzw. Eßtischfläche bilden, und die vorzugsweise in Holz ausgebildet sind.
